# EUROPEAN PATENT APPLICATION

(11) **EP 4 772 949 A1**
(43) Date of publication of application: **08.07.2026**
(21) Application number: 24880245.6
(22) Date of filing: 16.10.2024
(51) Int. Cl.: G04G 17/04, G04G 17/08, G06F 1/16

(54) **WEARABLE ELECTRONIC DEVICE COMPRISING CONNECTOR**

(30) Priority: 16.10.2023 KR 20230138043; 01.12.2023 KR 20230172242
(71) Applicant: Samsung Electronics Co., Ltd., Suwon-si, Gyeonggi-do 16677 (KR)
(72) Inventor: OH, Donggyu, Suwon-si Gyeonggi-do 16677 (KR)
(74) Representative: Appleyard Lees IP LLP
(86) International application number: PCT/KR2024/096367
(87) International publication number: WO 2025/084909

(57) **Abstract**

The present disclosure relates to a wearable electronic device. The wearable electronic device according to one embodiment of the present disclosure may comprise: a housing including a connector configured to allow coupling of an outer circumferential wall and a strap; and a display disposed in the housing, wherein the connector comprises: a fastening surface extending to the outside of the outer circumferential wall; a fastening hole into which at least a portion of the strap is inserted; and a recess recessed from the fastening surface and in which at least a portion of the fastening hole is positioned..

## Description

### [Technical Field]

Various embodiments disclosed herein relate to a wearable electronic device and, for example, to a wearable electronic device including a connector.

### [Background Art]

Typically, the term "electronic device" may refer to a device that performs a specific function based on an installed program, such as a home appliance, an electronic scheduler, a portable multimedia player, a mobile communication terminal, a tablet PC, a video/audio device, a desktop/laptop PC, or a vehicle navigation system. As the integration level of electronic devices increases and ultra-high-speed, large-capacity wireless communications become widespread, various functions may be incorporated into a single compact wearable electronic device, such as a mobile communication terminal. For example, not only communication functions but also entertainment functions such as gaming, multimedia functions such as music and video playback, communication and security functions for mobile banking, as well as schedule management and electronic wallet functions, are being integrated into a single electronic device.

Recently, wearable electronic devices, which are wearable on a body, have been commercialized, and mobile communication terminals and wearable electronic devices are being used daily. Since a wearable electronic device may be maintained for a considerable amount of time in the state of being in contact with a user's body, the electronic device may be useful for medical or health care. For example, depending on sensors mounted thereon, an electronic device may detect biometric information such as a user's photoplethysmograph (PPG), sleep intervals, skin temperature, heart rate, and/or electrocardiogram, and the detected biometric information may be stored in the electronic device or transmitted in real time to a medical institution for use in managing the user's health. In general, electronic devices have a bar shape, a box shape, or a flat plate shape; however, wearable electronic devices may include a combination of a plurality of segments in consideration of wearing convenience while accommodating curvature of a user's body. For example, a wrist-worn electronic device may include a housing that accommodates various circuit devices and serves as a main body, and at least one wearing member, and a face-worn electronic device may include lens(es) corresponding to both eyes of a user and at least one temple bow.

The above-described information may be provided as related art for the purpose of helping to understand the disclosure. No claim or determination is made regarding whether any of the foregoing may be applied as prior art with respect to the disclosure.

### [Detailed Description of the Invention]

### [Technical Solution]

According to an embodiment of the disclosure, a wearable electronic device may include a housing including a connector configured to couple an outer circumference wall and a strap, and a display disposed in the housing. The connector may include a coupling surface extending outward from the outer circumference wall, a coupling hole configured to allow insertion of at least a portion of the strap, and a recess recessed from the coupling surface, in which at least a portion of the coupling hole is positioned.

According to an embodiment of the disclosure, a wearable electronic device may include a housing including a connector configured to couple an outer circumference wall and a strap, and a display disposed in the housing. The connector may include a coupling surface extending outward from the outer circumference wall, a recess recessed from the coupling surface and including a guide surface spaced apart from the coupling surface, and a coupling hole formed in the guide surface.

### [Brief Description of Drawings]

The above-described aspects or other aspects, configurations, and/or advantages regarding an embodiment of the disclosure may become more apparent through the following detailed description made with reference to the accompanying drawings.
FIG. 1 is a block diagram of an electronic device according to various embodiments of the disclosure in a network environment.
FIG. 2 is a view illustrating a wearable electronic device according to an embodiment of the disclosure.
FIG. 3 is a view illustrating a wearable electronic device according to an embodiment of the disclosure.
FIG. 4 is an exploded view illustrating a wearable electronic device according to an embodiment of the disclosure.
FIG. 5 is a view illustrating a portion of a wearable electronic device according to an embodiment of the disclosure.
FIG. 6 is a view illustrating a portion of a wearable electronic device according to an embodiment of the disclosure.
FIG. 7 is a view illustrating a portion of the wearable electronic device according to an embodiment of the disclosure.
FIG. 8 is a partial cross-sectional view illustrating the wearable electronic device according to an embodiment of the disclosure.
FIG. 9 is a view illustrating a portion of a wearable electronic device and machining tool according to an embodiment of the disclosure.
FIG. 10 is a view illustrating a strap according to an embodiment of the disclosure.
FIG. 11 is a view illustrating a portion of the strap according to an embodiment of the disclosure.
FIG. 12 is a view illustrating a portion of the strap according to an embodiment of the disclosure.
FIG. 13 is a view illustrating how to couple a wearable electronic device and the strap according to an embodiment of the disclosure.
FIG. 14 is a view illustrating how to couple a wearable electronic device and the strap according to an embodiment of the disclosure.
FIG. 15 is a view illustrating a portion of a wearable electronic device according to an embodiment of the disclosure.
FIG. 16 is a view illustrating a portion of a strap according to an embodiment of the disclosure.
FIG. 17 is a view illustrating a portion of the strap according to an embodiment of the disclosure.
FIG. 18 is a view illustrating a portion of a wearable electronic device according to an embodiment of the present disclosure.
FIG. 19 is a view illustrating a portion of a wearable electronic device according to an embodiment of the disclosure.
FIG. 20 is a view illustrating a portion of a wearable electronic device according to an embodiment of the disclosure.
FIG. 21 is a view illustrating a portion of a wearable electronic device according to an embodiment of the present disclosure.
FIG. 22 is a view illustrating a cover according to an embodiment of the disclosure.
FIG. 23 is a view illustrating a portion of the cover according to an embodiment of the disclosure.
FIG. 24 is a view illustrating a portion of a wearable electronic device to which the cover according to an embodiment of the disclosure is coupled.
FIG. 25 is a partial cross-sectional view illustrating the wearable electronic device to which the cover according to an embodiment of the disclosure is coupled.
FIG. 26 is a view illustrating a portion of a wearable electronic device according to an embodiment of the disclosure.
FIG. 27 is a view illustrating a portion of the wearable electronic device to which the cover according to an embodiment of the disclosure is coupled.
FIG. 28 is a partial cross-sectional view illustrating the wearable electronic device to which the cover according to an embodiment of the disclosure is coupled.
FIG. 29 is a block diagram illustrating a method of fabricating a portion of an electronic device according to an embodiment of the disclosure.

Throughout the appended drawings, like reference numerals may be assigned to like components, configurations, and/or structures.

### [Mode for Carrying out the Invention]

The following description with reference to the appended drawings may provide an understanding of various exemplary implementations of the disclosure, including the claims and their equivalents. An exemplary embodiment disclosed in the following description includes various specific details to help understanding, but is considered to be one of various exemplary embodiments. Accordingly, it will be understood by a person ordinarily skilled in the art that various implementations described herein may be variously changed and modified without departing from the scope and spirit of the disclosure. In addition, descriptions of well-known functions and configurations may be omitted for clarity and brevity.

The terms and words used in the following description and claims are not limited to a bibliographical meaning, but may be used to describe an embodiment of the disclosure clearly and consistently. Accordingly, it will be apparent to those skilled in the art that the following description of various implementations of the disclosure is provided for explanatory purposes and not intended to limit the scope of the disclosure and equivalents thereof.

Unless the context clearly indicates otherwise, the singular forms of "a," "an," and "the" should be understood to include the plural meaning. Accordingly, for example, the term "a component surface" may be understood to include one or more surfaces of the component.

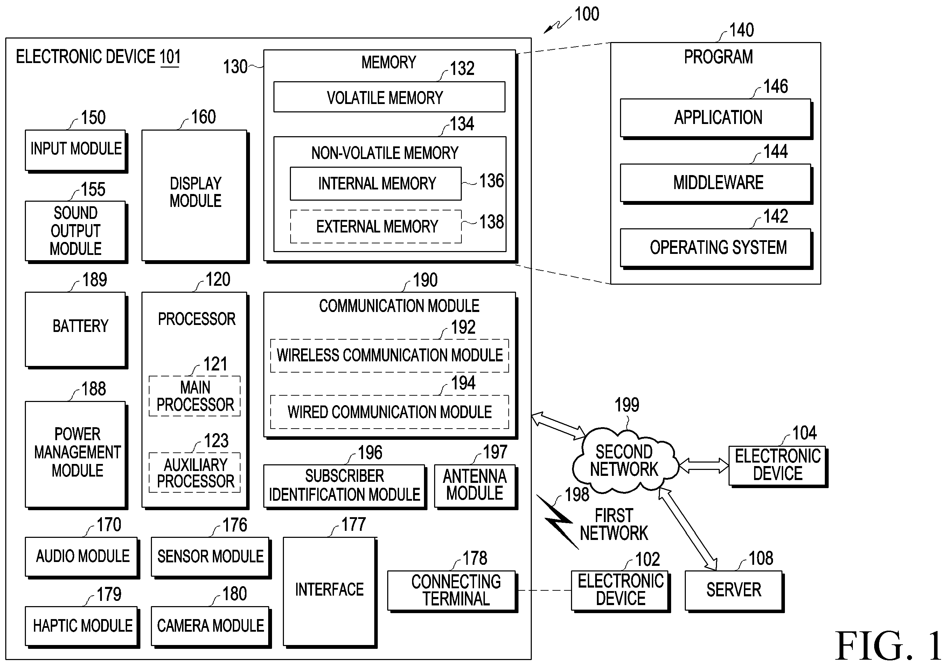

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

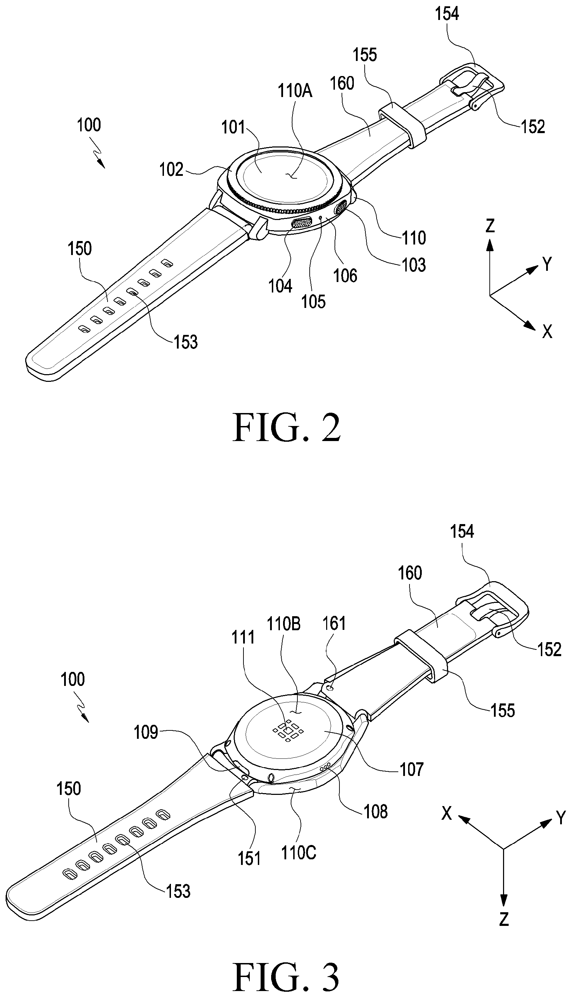

FIG. 2 is a front perspective view illustrating a wearable electronic device 100 according to an embodiment of the disclosure. FIG. 3 is a rear perspective view illustrating the wearable electronic device 100 of FIG. 2 according to an embodiment of the disclosure.

In the following detailed description, in the orthogonal coordinate systems of FIGS. 2 to 4, the X-axis direction may be understood as a width direction of the electronic device 100 or the housing 110, the Y-axis direction may be understood as a length direction of the electronic device 100 or the housing 110, and the Z-axis direction may be understood as a thickness direction of the electronic device 100 or the housing 110. In an embodiment, a direction in which a front surface (e.g., the first surface 110A of FIG. 2) of the electronic device 100 or the housing 110 is oriented may be defined as a first direction or a +Z direction, and a direction in which a rear surface (e.g., the second surface 110B of FIG. 3) of the electronic device 100 or the housing 110 is oriented may be defined as a second direction or a -Z direction.

Referring to FIGS. 2 and 3, the wearable electronic device 100 according to an embodiment may include a housing 110 including a first surface (or front surface) 110A, a second surface (or rear surface) 110B, and a side surface 110C surrounding a space between the first surface 110A and the second surface 110B, and wearing members 150 and 160 each connected to at least a portion of the housing 110 and configured to detachably fasten the electronic device 100 to a portion of a user's body (e.g., a wrist or an ankle). For example, the wearable electronic device 100 may take the form of a wristwatch. In an embodiment (not illustrated), the housing may refer to a structure that forms a portion of the first surface 110A of FIG. 2, and the second surface 110B and the side surface 110C of FIG. 3. According to an embodiment, at least a portion of the first surface 110A may be made of a substantially transparent front surface plate 101 (e.g., a glass plate or a polymer plate including various coating layers). The second surface 110B may be made of a substantially opaque rear surface plate 107. In an embodiment, when the electronic device includes a sensor module 111 disposed on the second surface 110B, the rear surface plate 107 may include an at least partially transparent area. The rear surface plate 107 may be made of, for example, coated or colored glass, ceramic, polymer, metal (e.g., aluminum, stainless steel (STS), or magnesium), or a combination of two or more of these materials. The side surface 110C may be defined by a side surface bezel structure (or a "side surface member") 106 coupled to the front surface plate 101 and the rear surface plate 107 and including metal and/or polymer. In an embodiment, the rear surface plate 107 and the side surface bezel structure 106 may be integrally configured and may include the same material (e.g., a metal material such as aluminum). The wearing members 150 and 160 may be formed of various materials and in various shapes. Multiple integrated unit links may be disposed to be movable with respect to each other by using a woven material, leather, rubber, urethane, metal, ceramic, or a combination of two or more of these materials.

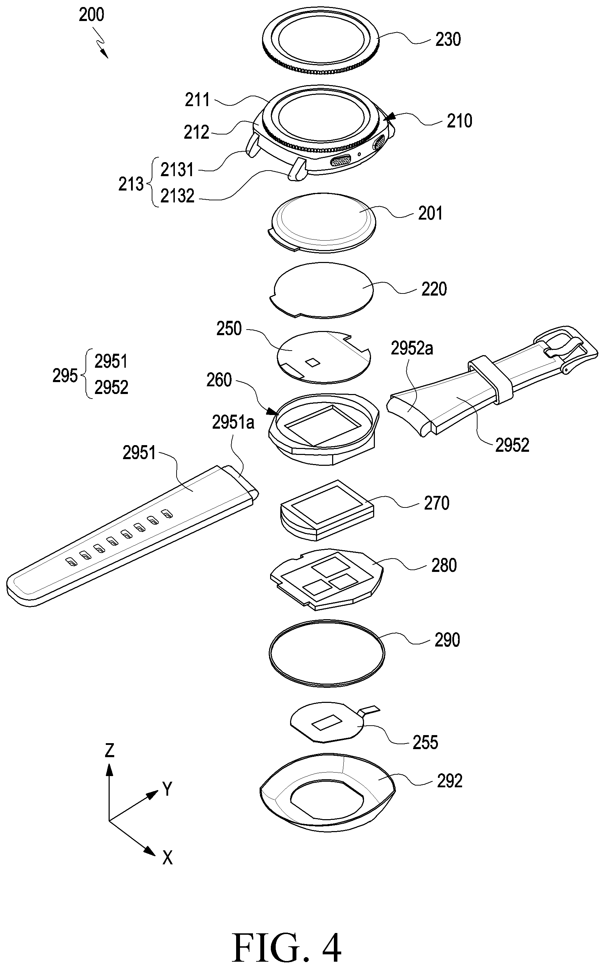

According to an embodiment, the electronic device 100 may include at least one of a display 220 (see FIG. 4), audio modules 105 and 108, a sensor module 111, key input devices 102, 103, and 104, and a connector hole 109. In an embodiments, in the electronic device 100, at least one of the components (e.g., the key input devices 102, 103, and 104, the connector hole 109, or the sensor module 111) may be omitted or other components may be additionally included.

The display (e.g., the display 220 in FIG. 4) may be exposed, for example, through a substantial portion of the front surface plate 101. The display 220 may have a shape corresponding to the shape of the front surface plate 101, and may have various shapes such as a circle, an ellipse, and a polygon. The display 220 may be coupled to or disposed adjacent to a touch detection circuit, a pressure sensor capable of measuring touch intensity (pressure), and/or a fingerprint sensor.

The audio modules 105 and 108 may include a microphone hole 105 and a speaker hole 108. A microphone configured to acquire external sound may be placed inside the microphone hole 105, and in an embodiment, multiple microphones may be placed to detect the direction of sound. The speaker hole 108 may be used for an external speaker and a call receiver. In an embodiment, a speaker may be included without a speaker hole (e.g., a piezo speaker).

The sensor module 111 may generate electrical signals or data values corresponding to an internal operating state or an external environmental state of the electronic device 100. The sensor module 111 may include, for example, a biometric sensor module 111 (e.g., an HRM sensor) disposed on the second surface 110B of the housing 110. The electronic device 100 may further include at least one of sensor modules (not illustrated), such as a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

The key input devices 102, 103, and 104 may include a wheel key 102 disposed on the first surface 110A of the housing 110 and configured to be rotatable in at least one direction, and/or side key buttons 103 and 104 disposed on the side surface 110C of the housing 110. The wheel key 102 may have a shape corresponding to the shape of the front surface plate 101. In an embodiment, the electronic device 100 may not include some or all of the above-mentioned key input devices 102, 103, and 104, and the key input devices 102, 103, and 104, which are not included, may be implemented in other forms such as soft keys on the display 220. The connector hole 109 may accommodate a connector (e.g., a USB connector) configured to transmit and receive power and/or data to and from an external electronic device and may include another connector hole (not illustrated) configured to accommodate a connector for transmitting and receiving audio signals to and from an external electronic device. The electronic device 100 may further include, for example, a connector cover (not illustrated), which covers at least a portion of the connector hole 109 and blocks inflow of external foreign matter into the connector hole.

Each of the wearing members 150 and 160 may be detachably coupled to at least a portion of the housing 110 by using a locking member 151 or 161. The locking members 151 and 161 may include binding components such as pogo pins, and depending on an embodiment, the locking members may be replaced with protrusions or grooves provided on the wearing members 150 and 160. For example, the wearing members 150 and 160 may be coupled to the housing 110 by engaging with the grooves or protrusions provided on the housing 110. Each of the wearing members 150 and 160 may include at least one of a fixing member 152, a fixing member coupling hole 153, a band guide member 154, and a band fixing ring 155.

The fixing member 152 may be configured to fix the housing 110 and the wearing members 150 and 160 to a portion of the user's body (e.g., a wrist, an ankle, or the like). The fixing member coupling holes 153 allow the housing 110 and the wearing members 150 and 160 to be fixed to a portion of the user's body in cooperation with the fixing member 152. The band guide member 154 may be configured to limit the movement range of the fixing member 152 when the fixing member 152 is coupled to any of the fixing member coupling holes 153, thereby ensuring that the wearing members 150 and 160 are brought into close contact with and bound to a portion of the user's body. The band fixing ring 155 may limit the movement range of the wearing members 150 and 160 in the state in which the fixing member 152 and the fixing member coupling holes 153 are coupled to each other.

FIG. 4 is an exploded perspective view illustrating the wearable electronic device of FIG. 2 according to an embodiment of the disclosure.

Referring to FIG. 4, the wearable electronic device 200 may include a side surface bezel structure 210, a wheel key 230, a front surface plate 201 (e.g., the front surface plate 101 of FIG. 2), a display 220, a first antenna 250, a second antenna (e.g., an antenna included in a second circuit board 255), a support member 260 (e.g., a bracket), a battery 270, a printed circuit board 280, a sealing member 290, a rear surface plate 292, and a wearing member 295 (e.g., the wearing members 150 and 160 of FIG. 2 or FIG. 3). At least one of the components of the electronic device 200 may be the same as or similar to at least one of the components of the electronic device 100 of FIG. 2 or 3, and a redundant description thereof will be omitted below. The support member 260 may be disposed inside the electronic device 200 and connected to the side bezel structure 210, or may be integrally configured with the side bezel structure 210. The support member 260 may be made of, for example, a metal material and/or a non-metal (e.g., polymer) material. The support member 260 may include one surface to which the display 220 is coupled and the other surface to which the printed circuit board 280 is coupled. The printed circuit board 280 may be equipped with a processor, memory, and/or an interface. The processor may include, for example, one or more of a central processing unit, an application processor, a graphics processing unit (GPU), an application processor sensor processor, or a communication processor.

The memory may include, for example, volatile memory or non-volatile memory. The interface may include, for example, a high-definition multimedia interface (HDMI), a universal serial bus (USB) interface, an SD card interface, and/or an audio interface. For example, the interface may electrically or physically connect the electronic device 200 to an external electronic device, and include a USB connector, an SD card/MMC connector, or an audio connector.

The battery 270 may serve as a device that supplies power to at least one component of the electronic device 200, and may include, for example, a non-rechargeable primary cell, a rechargeable secondary cell, or a fuel cell. At least a portion of the battery 270 may be disposed on substantially the same plane as, for example, the printed circuit board 280. The battery 270 may be integrally disposed inside the electronic device 200, or may be disposed to be detachable from the electronic device 200.

The first antenna 250 may be disposed between the display 220 and the support member 260. The first antenna 250 may include, for example, a near-field communication (NFC) antenna, a wireless charging antenna, and/or a magnetic secure transmission (MST) antenna. For example, the first antenna 250 may perform short-range communication with an external device, may wirelessly transmit/receive power required for charging, or may transmit a short-range communication signal or a magnet-based signal including payment data. In an embodiment, an antenna structure may be may be formed by a portion or a combination of the side surface bezel structure 210 and/or the support member 260.

The second circuit 255 may be disposed between the printed circuit board 280 and the rear surface plate 293. The second circuit board 255 may include an antenna, for example, a near-field communication (NFC) antenna, a wireless charging antenna, and/or a magnetic secure transmission (MST) antenna. For example, the second circuit board 255 may perform short-range communication with an external device, may wirelessly transmit/receive power required for charging, or may transmit a short-range communication signal or a magnet-based signal including payment data. In an embodiment, an antenna structure may be formed by a portion or a combination of the side surface bezel structure 210 and/or the rear surface plate 293. In various embodiments, when the electronic device 200 (e.g., the electronic device 100 of FIGS. 2 and 3) includes a sensor module (e.g., the sensor module 111 of FIG. 3), a sensor circuit disposed on the second circuit board 255 or a sensor element separate from the second circuit board 255 (e.g., a photoelectric conversion element or an electrode pad) may be disposed. For example, an electronic component provided as the sensor module 111 may be disposed between the circuit board 280 and the rear surface plate 293.

The sealing member 290 may be located between the side surface bezel structure 210 and the rear surface plate 293. The sealing member 290 may be configured to block moisture and foreign matter from flowing into the space surrounded by the side surface bezel structure 210 and the rear surface plate 293 from the exterior.

According to an embodiment, the wearable electronic device 200 may include a side surface bezel structure 210. The side surface bezel structure 210 may be referred to as a "housing." The housing 210 may form an internal space. The display 220 may be disposed in the internal space of the housing 210. The housing 210 may include a seating portion 211. The display 220 may be disposed on the seating portion 211 of the housing 210. The housing 210 may include an outer circumference wall 212. The outer circumference wall 212 may surround at least a portion of the display 220. The outer circumference wall 212 may have a closed-loop shape. The housing 210 may include a connector 213. The connector 213 may be integrated with the outer circumference wall 212. The connector 213 may protrude radially outward from the outer circumference wall 212. The connector 213 may include a first connector 2131 and a second connector 2132. The first connector 2131 and the second connector 2132 may be spaced apart from each other. The wearable electronic device 200 may include a wearing member 295. The wearing member 295 may be referred to as a strap. The strap 295 may be coupled to the connector 213. At least a portion of the strap 295 may be inserted and fixed between the first connector 2131 and the second connector 2132. The strap 295 may include fixing portions 2951a and 2952a. The fixing portions 2951a and 2952a may be inserted between the first connector 2131 and the second connector 2132 and coupled to the connector 213. The strap 295 may include a first strap 2951 and a second strap 2952. The first strap 2951 and the second strap 2952 may be coupled to the housing 210 at different positions of the housing 210.

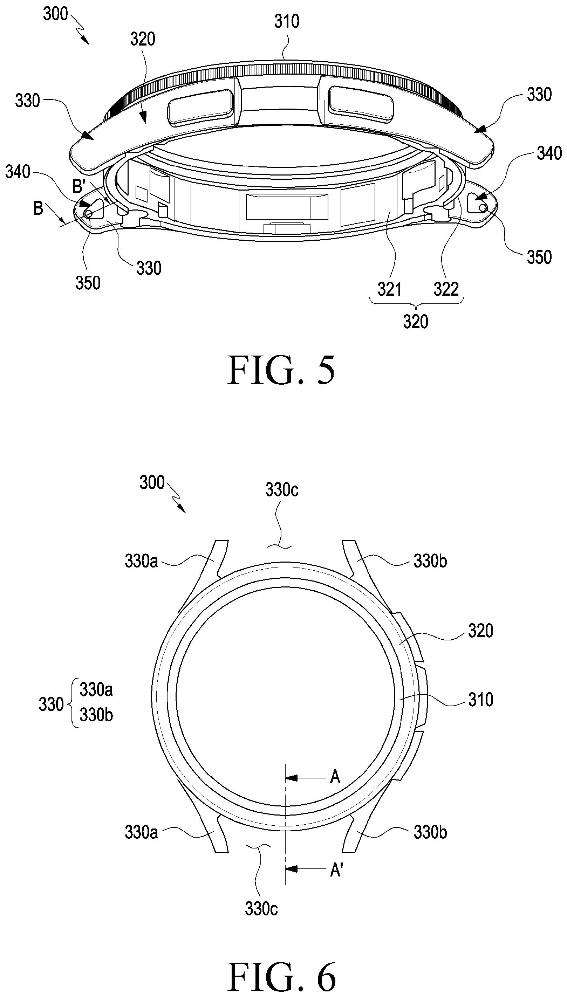

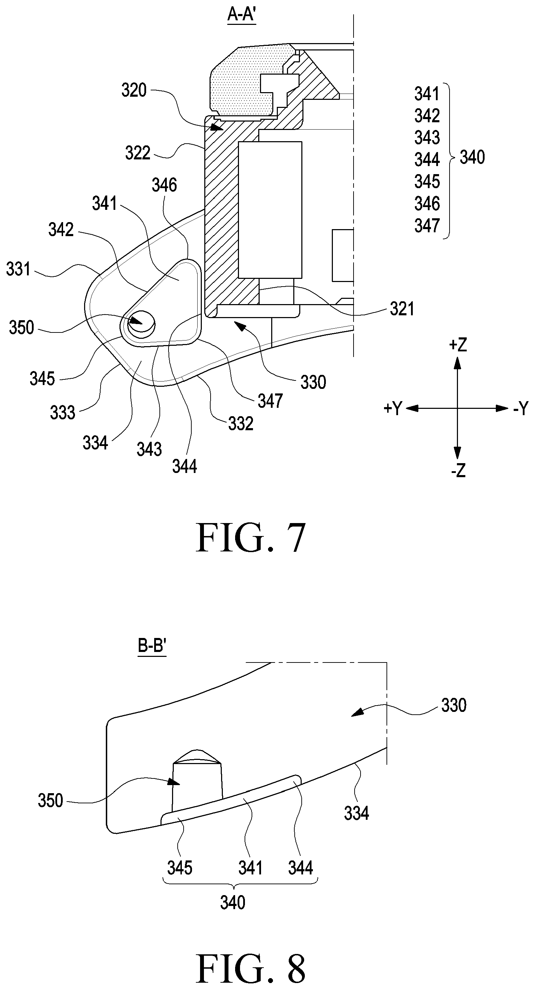

FIG. 5 is a perspective view illustrating a housing 300 according to an embodiment of the disclosure. FIG. 6 is a view illustrating the housing 300 viewed from one side according to an embodiment of the disclosure. The components to be described with reference to FIGS. 5 and 6 may be partially or entirely the same as the components described with reference to FIGS. 1 to 4. The components to be described with reference to FIGS. 5 and 6 may be partially or entirely the same as the components to be described with reference to FIGS. 7 to 29.

According to an embodiment, the wearable electronic device 200 may include a housing 300. The housing 300 may be the same as the housing 210 described with reference to FIGS. 1 to 4. An internal space may be formed inside the housing 300. A display (e.g., the display 220 of FIG. 4) may be disposed in the housing 300. Components of the wearable electronic device 200 (e.g., the antenna 250, the support member 260, the battery 270, the circuit boards 255 and 280, and the sealing member 290) may be disposed inside the housing 300.

According to an embodiment, the housing 300 may include a seating portion 310 and an outer circumference wall 320. The display (e.g., the display 220 of FIG. 4) may be disposed on the seating portion 310. The outer circumference wall 320 may be disposed to surround the seating portion 310. The outer circumference wall 320 may form a surface of the wearable electronic device 200. The outer circumference wall 320 may have a cylindrical shape. The outer circumference wall 320 may include an inner surface 321 and an outer surface 322. The outer surface 322 of the outer circumference wall 320 may be exposed to the outside of the wearable electronic device 200.

According to an embodiment, the housing 300 may include a connector 330. The connector 330 may be integrated with the outer circumference wall 320. The connector 330 may protrude radially outward from the outer circumference wall 320. The connector 330 may include a plurality of connectors 330. The plurality of connectors 330 may be spaced apart from each other in a circumferential direction of the outer circumference wall 320. According to an embodiment, the connector 330 may include a first connector 330a and a second connector 330b. The first connector 330a and the second connector 330b may be spaced apart from each other in the circumferential direction of the outer circumference wall 320. The housing 300 may include a coupling space 330c formed between the first connector 330a and the second connector 330b. At least a portion of a strap (e.g., the strap 295 of FIG. 4) may be inserted into the coupling space 330c.

According to an embodiment, the housing 300 may include a recess 340. The recess 340 may be recessed in the connector 330. The recess 340 may be formed in each of the plurality of connectors 330.

According to an embodiment, the housing 300 may include a coupling hole 350. The coupling hole 350 may be opened in the connector 330. The coupling hole 350 may be positioned in the recess 340. The coupling hole 350 may be opened in the recess 340. The coupling hole 350 may be formed in each of the plurality of connectors 330.

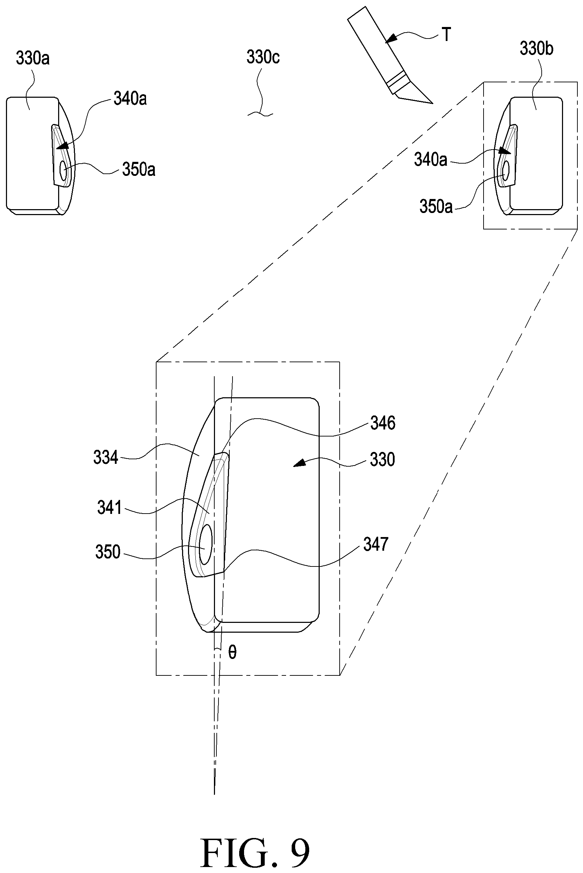

FIG. 7 is a partial cross-sectional view of the housing 300 taken along line A-A' illustrated in FIG. 6. FIG. 8 is a partial cross-sectional view of the housing 300 taken along line B-B' illustrated in FIG. 5. The components to be described with reference to FIGS. 7 and 8 may be partially or entirely the same as the components described with reference to FIGS. 1 to 6. The components to be described with reference to FIGS. 7 and 8 may be partially or entirely the same as the components to be described with reference to FIGS. 9 to 29.

According to an embodiment, the connector 330 may include a first wall 331, a second wall 332, and a third wall 333. The first wall 331 may extend in a direction away from the outer surface 322 of the outer circumference wall 320. The second wall 332 may extend in a direction away from the outer surface 322 of the outer circumference wall 320. The first wall 331 and the second wall 332 may be spaced apart from each other. The third wall 333 may connect the first wall 331 and the second wall 332. The recess 340 may be formed between the first wall 331 and the second wall 332. The connector 330 may include a coupling surface 334. The coupling surface 334 may be surrounded by the first wall 331, the second wall 332, and the third wall 333. The recess 340 may be recessed from the coupling surface 334.

According to an embodiment, the recess 340 may include a guide surface 341. The guide surface 341 may be surrounded by the first wall 331, the second wall 332, and the third wall 333. The guide surface 341 may be spaced apart from the coupling surface 334. A coupling hole 350 may be formed through the guide surface 341.

According to an embodiment, the recess 340 may include a first guide wall 342, a second guide wall 343, and a third guide wall 344. The recess 340 may include guide walls 342, 343, and 344. The guide walls 342, 343, and 344 may include the first guide wall 342, the second guide wall 343, and the third guide wall 344. The guide walls 342, 343, and 344 may be connected to the coupling surface 334. The guide walls 342, 343, and 344 may form a step with respect to the coupling surface 334. The guide walls 342, 343, and 344 may surround at least a portion of the guide surface 341. The first guide wall 342 may extend substantially parallel to the first wall 331. The first guide wall 342 may extend in a direction away from the outer surface 322 of the outer circumference wall 320. The second guide wall 343 may extend in a direction away from the outer surface 322 of the outer circumference wall 320. The third guide wall 344 may extend parallel to the outer surface 322 of the outer circumference wall 320.

According to an embodiment, the recess 340 may include a first edge 345, a second edge 346, and a third edge 347. The recess 340 may include edges 345, 346, and 347. The edges 345, 346, and 347 may include the first edge 345, the second edge 346, and the third edge 347. The edges 345, 346, and 347 may surround at least a portion of the guide surface 341. The first edge 345 may connect the first guide wall 342 and the second guide wall 343. The first edge 345 may face the third wall 333. The first edge 345 may be curved toward the third wall 333. The second edge 346 may connect the first guide wall 342 and the third guide wall 344. The second edge 346 may face the first wall 331. The second edge 346 may be curved toward the first wall 331. The third edge 347 may connect the second guide wall 343 and the third guide wall 344. The third edge 347 may face the second wall 332. The third edge 347 may be curved toward the second wall 332. The coupling hole 350 may be formed at a position closer to the first edge 345 than to the second and third edges 346 and 347. The second edge 346 may be positioned closer to the outer circumference wall 320 than the first edge 345. The third edge 347 may be positioned closer to the outer circumference wall 320 than the first edge 345. The first edge 345 may be positioned farther from the outer circumference wall 320 than the second and third edges 346 and 347.

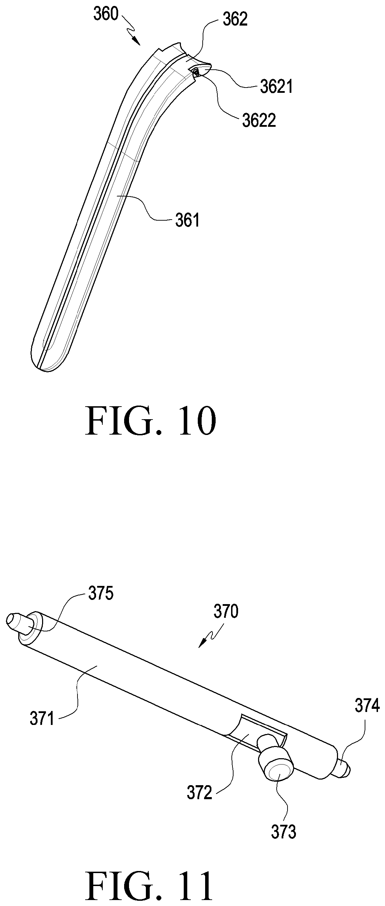

FIG. 9 is a view conceptually illustrating connectors 330a and 330b and a machining tool T according to an embodiment of the disclosure. The components to be described with reference to FIG. 9 may be partially or entirely the same as the components to be described with reference to FIGS. 1 to 8. The components to be described with reference to FIG. 9 may be partially or entirely the same as the components to be described with reference to FIGS. 10 to 29.

According to an embodiment, the connector 330 may include a first connector 330a and a second connector 330b, and a coupling space 330c may be formed between the first connector 330a and the second connector 330b.

According to an embodiment, the first connector 330a may include a first recess 340a and a first coupling hole 350a. The descriptions of the recess 340 and the coupling hole 350 described with reference to FIGS. 7 and 8 may be equally applied to the first recess 340a and the first coupling hole 350a.

According to an embodiment, the second connector 330b may include a second recess 340b and a second coupling hole 350b. The descriptions of the recess 340 and the coupling hole 350 described with reference to FIGS. 7 and 8 may be equally applied to the second recess 340b and the second coupling hole 350b.

According to an embodiment, a machining member T may be inserted into the coupling space 330c. The machining member T may machine a surface of the coupling surface 334 to form the recess 340. The machining member T may cut the surface of the coupling surface 334. After the coupling surface 334 is cut by the machining member T, the guide surface 341 of the recess 340 may be formed.

According to an embodiment, the guide surface 341 may be inclined with respect to the coupling surface 334. For example, an inclination angle θ may be formed between the guide surface 341 and the coupling surface 334. The guide surface 341 may be inclined in a direction away from the coupling surface 334. For example, the guide surface 341 may become farther from the coupling surface 334 toward the second edge 346 from the third edge 347. The above-described structure may facilitate insertion of the machining member T into the coupling space 330c and may facilitate machining by the machining member T.

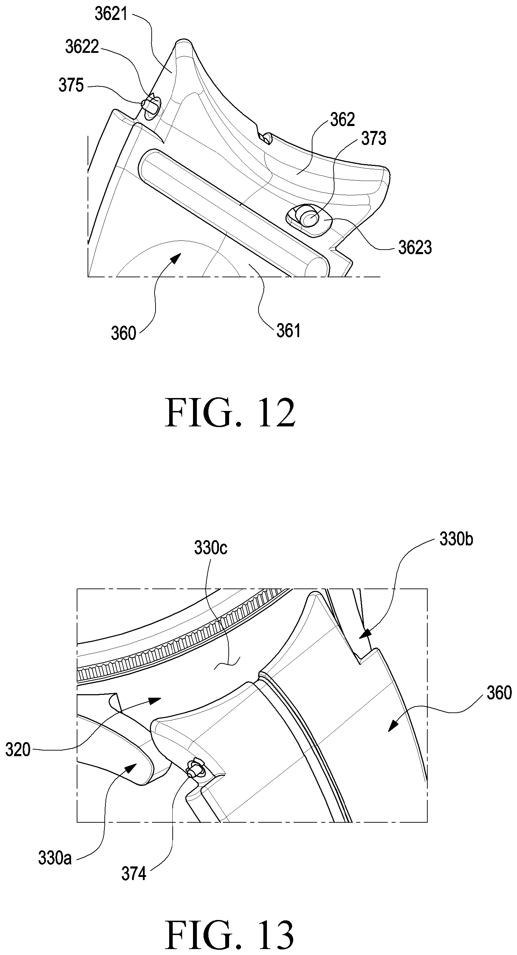

FIG. 10 is a perspective view illustrating a strap 360 according to an embodiment of the disclosure. FIG. 11 is a perspective view illustrating a holder 370 according to an embodiment of the disclosure. FIG. 12 illustrates a portion of the strap 360 according to an embodiment of the disclosure. The components to be described with reference to FIGS. 10 and 12 may be partially or entirely the same as the components described with reference to FIGS. 1 to 9. The components to be described with reference to FIGS. 10 and 12 may be partially or entirely the same as the components to be described with reference to FIGS. 13 to 29.

According to an embodiment, the strap 360 may include a first portion 361 and a second portion 362. The first portion 361 and the second portion 362 may be integrally formed. The first portion 361 may be configured to be wound around a user's wrist. The first portion 361 may be a longitudinally extending portion of the strap 360. The second portion 362 may be a portion coupled to a housing (e.g., the housing 300 of FIG. 5). The second portion 362 may be referred to as a "fixing portion."

According to an embodiment, the second portion 362 may include a coupling body 3621. The coupling body 3621 may be connected to the first portion 361. The second portion 362 may include a through-hole 3622. The through-hole 3622 may be open in a side surface of the coupling body 3621. The second portion 362 may include a slit 3623. The slit 3623 may be open in the coupling body 3621. The through-hole 3622 and the slit 3623 may be formed at positions spaced apart from each other.

According to an embodiment, the strap 360 may include a holder 370. At least a portion of the holder 370 may be disposed inside the strap 360. At least a portion of the holder 370 may be movably disposed inside the strap 360. The holder 370 may include a holder body 371. The holder body 371 may be fixed inside the strap 360. The holder 370 may include a slider 372. The slider 372 may be movably disposed inside the holder body 371. The holder 370 may include a grip 373. The grip 373 may protrude from the slider 372. The grip 373 may protrude to the outside of the holder body 371. The holder 370 may include coupling pins 374 and 375. The coupling pins 374 and 375 may protrude from the slider 372. The coupling pins 374 and 375 may move together with the slider 372. The coupling pins 374 and 375 may include a first coupling pin 374 and a second coupling pin 375 that are spaced apart from each other.

According to an embodiment, the coupling pins 374 and 375 may pass through the through-hole 3622. The coupling pins 374 and 375 may be exposed to the outside of the strap 360. The grip 373 may be positioned inside the slit 3623. The grip 373 may be movably disposed inside the slit 3623.

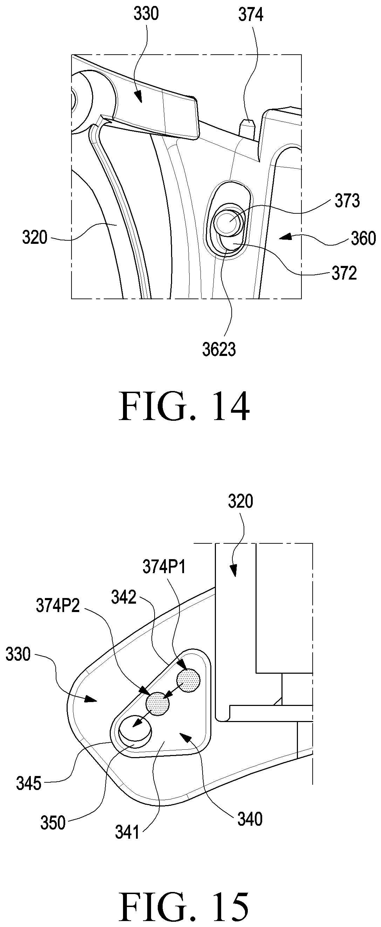

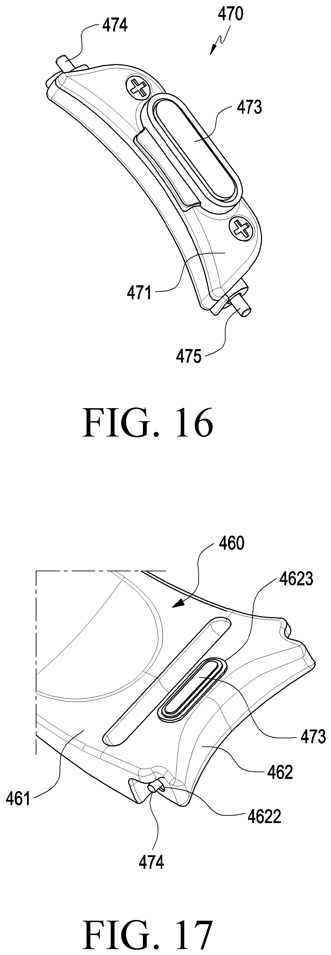

FIG. 13 is a view illustrating coupling between the housing 300 and the strap 360. FIG. 13 may be a view in which the housing 300 and the strap 360 are viewed from a first direction (e.g., an upper side) toward a second direction (e.g., a lower side). FIG. 14 is a view illustrating coupling between the housing 300 and the strap 360. FIG. 14 may be a view in which the housing 300 and the strap 360 of FIG. 13 are viewed from the second direction (e.g., the lower side) toward the first direction (e.g., the upper side). FIG. 15 is a view illustrating movement of the coupling pins 374 and 375 when the housing 300 and the strap 360 are coupled. The components to be described with reference to FIGS. 13 to 15 may be partially or entirely the same as the components described with reference to FIGS. 1 to 12. The components to be described with reference to FIGS. 13 to 15 may be partially or entirely the same as the components to be described with reference to FIGS. 16 to 29.

According to an embodiment, the strap 360 may be partially inserted into the coupling space 330c between the first connector 330a and the second connector 330b. The strap 360 may face the outer circumference wall 320. One side surface of the strap 360 may be in contact with one of the first connector 330a or the second connector 330b, and the other side surface of the strap 360 may be spaced apart from the other one of the first connector 330a or the second connector 330b. The grip 373 may be movably disposed within the slit 3623. When the grip 373 is held and then moved, the slider 372 may move, and the coupling pin 374 may move together with the slider 372. With reference to FIG. 14, when the grip 373 is moved in a direction away from the connector 330, the coupling pin 374 may move away from the connector 330. The user may hold the grip 373 to move the coupling pin 374 away from the connector 330, and then release the grip 373 when the coupling pin 374 is seated on the guide surface 341 of the recess 340. The user may adjust the position of the coupling pin 374 on the guide surface 341 by holding and moving the grip 373 or the strap 360.

According to an embodiment, when the coupling pin 374 is positioned on the guide surface 341, the coupling pin 374 may move along the guide surface 341. For example, the coupling pin 374 may move from a first position 374P1 to a second position 374P2 along the guide surface 341. The coupling pin 374 may move along the guide surface 341 toward the coupling hole 350. The coupling pin 374 may move in a direction away from the outer circumference wall 320. The coupling pin 374 may be engaged with guide walls 342, 343, and 344 of the recess 340, and movement of the coupling pin 374 may be guided by the guide walls 342, 343, and 344. The coupling pin 374 may move along the guide walls 342, 343, and 344. The coupling pin 374 may move toward the first edge 345 and may be inserted into the coupling hole 350. When the coupling pin 374 is inserted into the coupling hole 350, the strap 360 may be fixed to the housing 300.

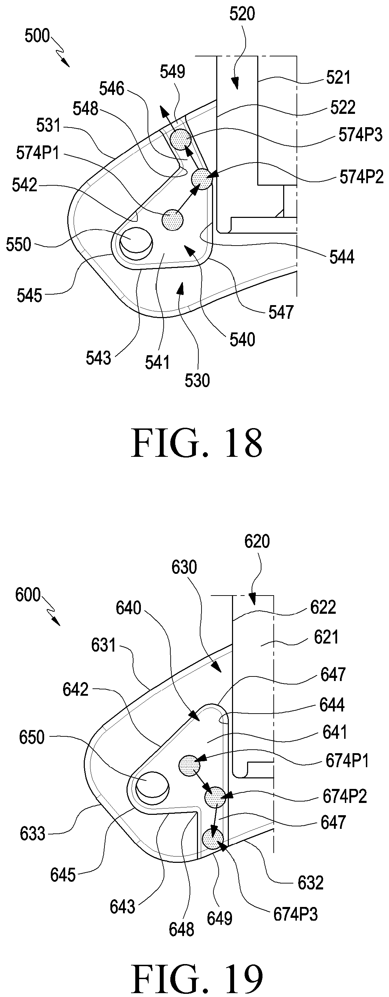

FIG. 16 is a perspective view illustrating a holder 470 according to an embodiment of the disclosure. FIG. 17 is a perspective view illustrating the holder 470 and a strap 460 according to an embodiment of the disclosure. The components to be described with reference to FIGS. 16 and 17 may be partially or entirely the same as the components described with reference to FIGS. 1 to 15. The components to be described with reference to FIGS. 16 and 17 may be partially or entirely the same as the components to be described with reference to FIGS. 18 to 29.

According to an embodiment, the holder 470 may include a holder body 471, a button 473, and coupling pins 474 and 475. The descriptions of the holder body 371 and the coupling pins 374 and 375 described with reference to FIGS. 1 to 15 may be equally applied to the holder body 471 and the coupling pins 474 and 475. The button 473 may be movably disposed within the holder body 471. A user may push the button 473 to move the button 473 toward the inside of the holder body 471.

According to an embodiment, the holder 470 may be disposed inside a strap 460. The button 473 may be exposed to the outside of the strap 460. The strap 460 may include a first portion 461 and a second portion 462 including a through-hole 4622 and a slit 4623. Descriptions of the strap 360 described with reference to FIGS. 1 to 15 may be equally applied to the strap 460. The button 473 may be movably disposed within the slit 4623. The button 473 may protrude to the outside of the second portion 462, and the user may push the button 473. When the button 473 is pushed, the button 473 may move toward an inside of the second portion 462. When the button 473 moves toward the inside of the second portion 462, the coupling pin 474 may move toward the inside of the second portion 462. The user may push the button 473 to move the coupling pin 474 into the strap 460, and may release pushing of the button 473 to move the coupling pin 474 to the outside of the strap 460. The user may control movement of the coupling pin 474 through the button 473, and may couple the strap 460 to the connector 330 by the method described with reference to FIGS. 13 to 15.

FIG. 18 is a partial cross-sectional view of a housing 500 according to an embodiment of the disclosure. The components to be described with reference to FIG. 18 may be partially or entirely the same as the components described with reference to FIGS. 1 to 17. The components to be described with reference to FIG. 18 may be partially or entirely the same as the components to be described with reference to FIGS. 19 to 29.

According to an embodiment, the housing 500 may include an outer circumference wall 520 and a connector 530. The descriptions of the outer circumference wall 320 and the connector 330 described with reference to FIGS. 1 to 17 may be equally applied to the outer circumference wall 520 and the connector 530. For example, the outer circumference wall 520 may include an inner surface 521 and an outer surface 522. For example, the connector 530 may include a first wall 531.

According to an embodiment, the housing 500 may include a recess 540. The recess 540 may be recessed in the connector 530. The housing 500 may include a coupling hole 550 formed in the recess 540.

According to an embodiment, the recess 540 may include a guide surface 541, a first guide wall 542, a second guide wall 543, a third guide wall 544, a first edge 545, and a third edge 547. The descriptions of the components (e.g., the guide surface 341, the first guide wall 342, the second guide wall 343, the third guide wall 344, the first edge 345, and the third edge 347) described with reference to FIGS. 1 to 17 may be equally applied to the above-described components (e.g., the guide surface 541, the first guide wall 542, the second guide wall 543, the third guide wall 544, the first edge 545, and the third edge 547).

According to an embodiment, the recess 540 may include a tunnel 546. The tunnel 546 may be recessed into the connector 530. The tunnel 546 may be connected to the guide surface 541. The tunnel 546 may connect an outside of the connector 530 with the guide surface 541. The tunnel 546 may pass through the first wall 531. The tunnel 546 may be connected to the first guide wall 542 and the third guide wall 544. The tunnel 546 may extend from the first guide wall 542 and the third guide wall 544 toward the first wall 531. The recess 540 may include a bent portion 548. The bent portion 548 may connect the first guide wall 542 and the tunnel 546. The recess 540 may include an outlet 549. The outlet 549 may form an end portion of the tunnel 546. The outlet 549 may be open at the first wall 531.

According to an embodiment, a coupling pin (e.g., the coupling pin 374 of FIGS. 10 to 15) positioned inside the recess 540 may move toward the tunnel 546 along the guide surface 541. The coupling pin 374 that has moved to the tunnel 546 may exit to the outside of the connector 530 through the tunnel 546. For example, the coupling pin 374 positioned at a first position 574P1 may move to the tunnel 546 via a second position 374P2, and may exit to the outside of the connector 530 through the outlet 549 via a third position 374P3 inside the tunnel 546. The coupling pin 374 positioned outside the connector 530 may move to the guide surface 541 through the tunnel 546. The coupling pin 374 that has moved to the guide surface 541 may move to the coupling hole 550 along the guide surface 541.

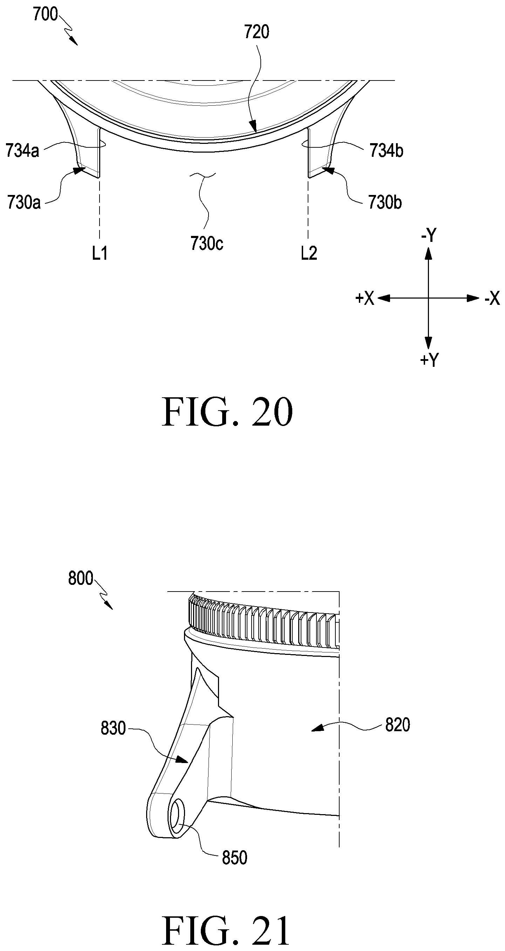

FIG. 19 is a partial cross-sectional view of a housing 600 according to an embodiment of the disclosure. The components to be described with reference to FIG. 19 may be partially or entirely the same as the components described with reference to FIGS. 1 to 18. The components to be described with reference to FIG. 19 may be partially or entirely the same as the components to be described with reference to FIGS. 20 to 29.

According to an embodiment, the housing 600 may include an outer circumference wall 620 and a connector 630. The descriptions of the outer circumference wall 320 and the connector 330 described with reference to FIGS. 1 to 17 may be equally applied to the outer circumference wall 620 and the connector 630. For example, the outer circumference wall 620 may include an inner surface 621 and an outer surface 622. For example, the connector 630 may include a first wall 631.

According to an embodiment, the housing 600 may include a recess 640. The recess 640 may be recessed in the connector 630. The housing 600 may include a coupling hole 650 formed in the recess 640.

According to an embodiment, the recess 640 may include a guide surface 641, a first guide wall 642, a second guide wall 643, a third guide wall 644, a first edge 645, and a second edge 647. The descriptions of the components (e.g., the guide surface 341, the first guide wall 342, the second guide wall 343, the third guide wall 344, the first edge 345, and the second edge 346) described with reference to FIGS. 1 to 17 may be equally applied to the above-described components (e.g., the guide surface 641, the first guide wall 642, the second guide wall 643, the third guide wall 644, the first edge 645, and the third edge 647).

According to an embodiment, the recess 640 may include a tunnel 646. The tunnel 646 may be recessed into the connector 630. The tunnel 646 may be connected to the guide surface 641. The tunnel 646 may connect the outside of the connector 630 and the guide surface 641. The tunnel 646 may pass through the second wall 632. The tunnel 646 may be connected to the second guide wall 643 and the third guide wall 644. The tunnel 646 may extend from the second guide wall 643 and the third guide wall 644 toward the second wall 632. The recess 640 may include a bent portion 648. The bent portion 648 may connect the second guide wall 643 and the tunnel 646. The recess 640 may include an outlet 649. The outlet 649 may form an end portion of the tunnel 646. The outlet 649 may be open at the second wall 632.

According to an embodiment, a coupling pin (e.g., the coupling pin 374 of FIGS. 10 to 15) positioned inside the recess 640 may move toward the tunnel 646 along the guide surface 641. The coupling pin 374 that has moved to the tunnel 646 may exit to the outside of the connector 630 through the tunnel 646. For example, the coupling pin 374 positioned at a first position 674P1 may move to the tunnel 646 via a second position 674P2, and may exit to the outside of the connector 630 through the outlet 649 via a third position 674P3 inside the tunnel 646. The coupling pin 374 positioned outside the connector 630 may move to the guide surface 641 through the tunnel 646. The coupling pin 374 that has moved to the guide surface 641 may move to the coupling hole 650 along the guide surface 641.

FIG. 20 is a view illustrating a portion of a housing 700 according to an embodiment of the disclosure. The components to be described with reference to FIG. 20 may be partially or entirely the same as the components described with reference to FIGS. 1 to 19. The components to be described with reference to FIG. 20 may be partially or entirely the same as the components to be described with reference to FIGS. 21 to 29.

According to an embodiment, the housing 700 may include an outer circumference wall 720. The housing 700 may include connectors 730a and 730b. The connectors 730a and 730b may protrude outward from the outer circumference wall 720. The connectors 730a and 730b may include a first connector 730a and a second connector 730b that are spaced apart from each other. A coupling space 730c may be formed between the first connector 730a and the second connector 730b. The first connector 730a may include a first coupling surface 734a. The second connector 730b may include a second coupling surface 734b. The coupling space 730c may be formed between the first coupling surface 734a and the second coupling surface 734b. The first coupling surface 734a and the second coupling surface 734b may extend parallel to each other. For example, an extension line L1 of the first coupling surface 734a and an extension line L2 of the second coupling surface 734b may be parallel to each other.

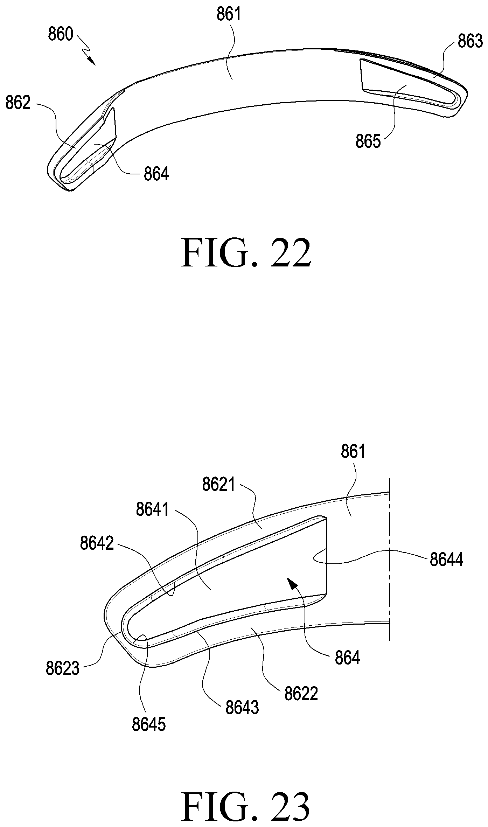

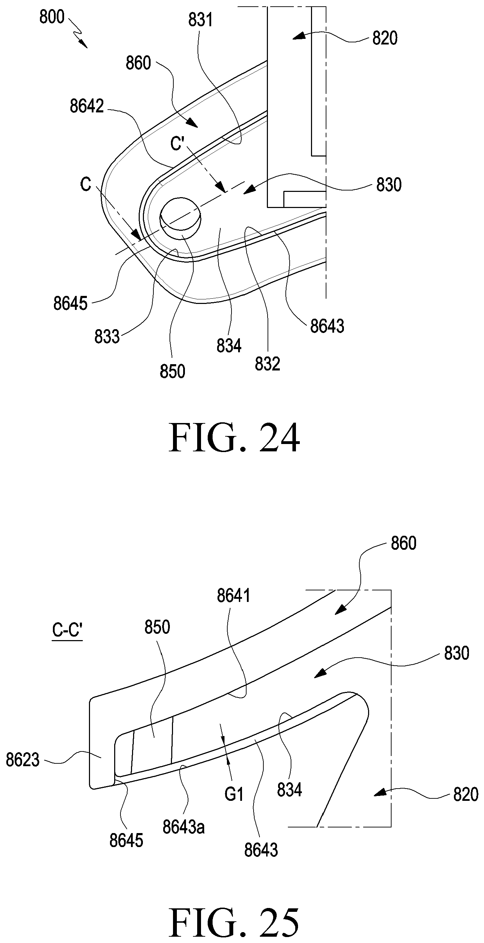

FIG. 21 is a view illustrating a portion of a housing 800 according to an embodiment of the disclosure. FIG. 22 is a view illustrating a cover 860 according to an embodiment of the disclosure. FIG. 23 is an enlarged view illustrating a portion of the cover 860 illustrated in FIG. 22. The components to be described with reference to FIGS. 21 to 23 may be partially or entirely the same as the components described with reference to FIGS. 1 to 20. The components to be described with reference to FIGS. 21 to 23 may be partially or entirely the same as the components to be described with reference to FIGS. 24 to 29.

According to an embodiment, the housing 800 may include an outer circumference wall 820 and a connector 830 protruding from the outer circumference wall 820. The housing 800 may include a coupling hole 850 open in the connector 830. A coupling pin (e.g., the coupling pin 374 of FIGS. 10 to 14) may be inserted into the coupling hole 850.

According to an embodiment, the electronic device 101 may include a cover 860. The cover 860 may surround at least a portion of the housing 800. The cover 860 may include a first cover portion 861, a second cover portion 862, and a third cover portion 863. The first cover portion 861, the second cover portion 862, and the third cover portion 863 may be integrally formed. The second cover portion 862 and the third cover portion 863 may form end portions of the cover 860. A plurality of connectors 830 may be formed to be spaced apart from each other along the outer circumference wall 820 of the housing 800. The second cover portion 862 may cover one of the plurality of connectors 830, and the third cover portion 863 may cover another one of the plurality of connectors 830.

According to an embodiment, the cover 860 may include a first accommodation portion 864 and a second accommodation portion 865. The first accommodation portion 864 may be formed in the second cover portion 862. The second accommodation portion 865 may be formed in the third cover portion 863. The cover 860 may include accommodation portions 864 and 865, and the accommodation portions 864 and 865 may include the first accommodation portion 864 and the second accommodation portion 865.

According to an embodiment, the second cover portion 862 may include a first wall 8621, a second wall 8622, and a third wall 8623. The first wall 8621, the second wall 8622, and the third wall 8623 may surround at least a portion of the accommodation portion 864.

According to an embodiment, the accommodation portion 864 may include a guide surface 8641, a first guide wall 8642, a second guide wall 8643, a third guide wall 8644, and an edge 8645. The guide surface 8641 may be recessed into the second cover portion 862. The first guide wall 8642 may be connected to the first wall 8621. The second guide wall 8643 may be connected to the second wall 8622. The third guide wall 8644 may be connected to the first cover portion 861. The edge 8645 may be connected to the third wall 8623.

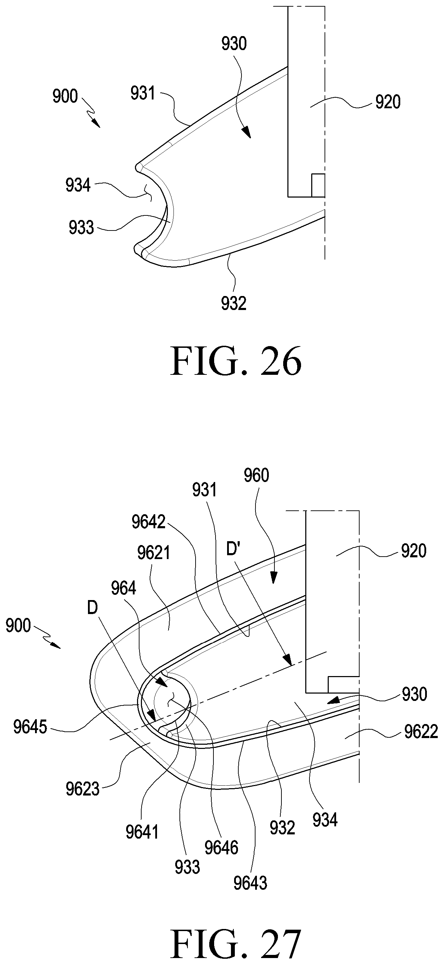

FIG. 24 is a view illustrating the connector 830 to which the cover 860 is coupled. FIG. 25 is a cross-sectional view taken along line C-C' illustrated in FIG. 24. The components described with reference to FIGS. 24 and 25 may be partially or entirely the same as the components described with reference to FIGS. 1 to 23. Some or all of the components described with reference to FIGS. 24 and 25 may also be the same as those described with reference to FIGS. 26 to 29.

According to an embodiment, the connector 830 may be inserted into the accommodation portion 864. The connector 830 may include a first connector wall 831 corresponding to the first guide wall 8642. The connector 830 may include a second connector wall 832 corresponding to the second guide wall 8643. The connector 830 may include a connector edge 833 corresponding to the edge 8645. The first guide wall 8642, the second guide wall 8643, and the edge 8645 may surround the connector 830. The connector 830 may be seated on the guide surface 8641.

According to an embodiment, the connector 830 may include a coupling surface 834, and the cover 860 may include guide walls 8642 and 8643. The coupling surface 834 may be spaced apart from a guide end portion 8643a of the guide wall 8643. A gap G1 may be formed between the coupling surface 834 and the guide end portion 8643a. A coupling pin (e.g., the coupling pin 374 of FIGS. 10 to 14) may move toward the coupling hole 850 along the coupling surface 834, and the guide wall 8643 may guide the movement of the coupling pin 374. The coupling pin 374 may have its movement restricted by the guide wall 8643 and may move toward the coupling hole 850 along the guide wall 8643. The coupling pin 374 may be engaged with the edge 8645 of the cover 860, and the coupling hole 850 may be disposed adjacent to the edge 8645.

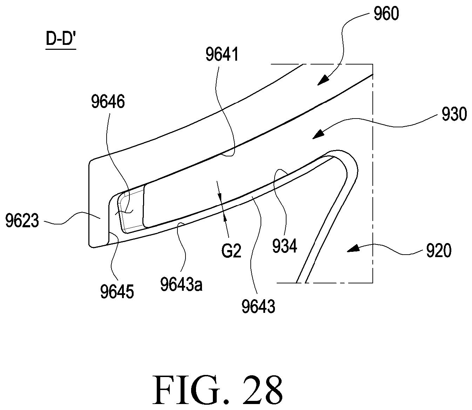

FIG. 26 is a view illustrating a portion of a housing 900 according to an embodiment of the disclosure. FIG. 27 is a view illustrating a connector 930 to which the cover 960 is coupled. FIG. 28 is a cross-sectional view taken along line D-D' illustrated in FIG. 27. The components to be described with reference to FIGS. 26 to 28 may be partially or entirely the same as the components described with reference to FIGS. 1 to 25.

According to an embodiment, the housing 900 may include an outer circumference wall 920 and a connector 930 protruding from the outer circumference wall 920. The connector 930 may include a first connector wall 931, a second connector wall 932, a connector edge 933, and a recessed space 934. The connector edge 933 may connect the first connector wall 931 and the second connector wall 932 and may be formed to be convex toward the outer circumference wall 920. The recessed space 934 may be defined as a space surrounded by the connector edge 933.

According to an embodiment, the electronic device 101 may include a cover 960. The connector 930 may be surrounded by the cover 960. The cover 960 may include an accommodation portion 964. The connector 930 may be inserted into the accommodation portion 964.

According to an embodiment, the cover 960 may include a first wall 9621, a second wall 9622, and a third wall 9623. The accommodation portion 964 may be surrounded by the first wall 9621, the second wall 9622, and the third wall 9623. The accommodation portion 964 may include a guide surface 9641 on which the connector 930 is seated, a first guide wall 9642 corresponding to the first connector wall 931, a second guide wall 9643 corresponding to the second connector wall 932, and a guide edge 9645 spaced apart from the connector edge 933. A coupling hole 9646 may be formed between the connector edge 933 and the guide edge 9645.

According to an embodiment, the connector 930 may include a coupling surface 934, and the cover 960 may include guide walls 9642 and 9643. The coupling surface 934 may be spaced apart from a guide end portion 9643a of the guide wall 9643. A gap G2 may be formed between the coupling surface 934 and the guide end portion 9643a. A coupling pin (e.g., the coupling pin 374 of FIGS. 10 to 14) may move toward the coupling hole 9646 along the coupling surface 934, and the guide wall 9643 may guide the movement of the coupling pin 374. The coupling pin 374 may have its movement restricted by the guide wall 9643 and may move toward the coupling hole 9645 along the guide wall 9643. The coupling pin 374 may be engaged with the guide edge 9645 of the cover 960, and the coupling hole 9645 may be formed between the guide edge 9645 and the connector edge 933. The recessed portion 934 may form a portion of the coupling hole 9645.

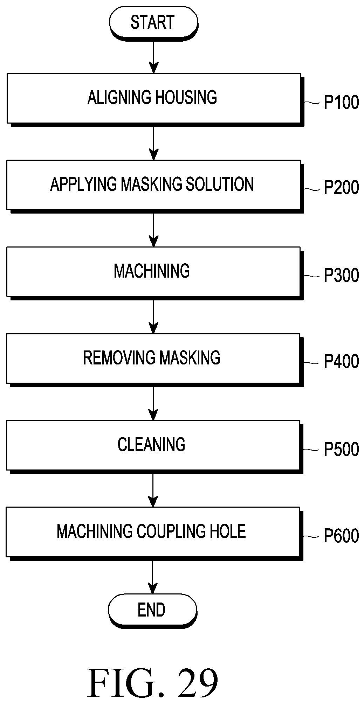

FIG. 29 is a block diagram illustrating a method of manufacturing the housing 300 according to an embodiment of the disclosure. The components to be described with reference to FIG. 29 may be partially or entirely the same as the components to be described with reference to FIGS. 1 to 28.

Referring to FIGS. 5, 6, and 29, the method of manufacturing the housing 300 may include an operation of aligning the housing 300 (P100). In the operation of aligning the housing 300, the first connector 330a and the second connector 330b may be arranged so as not to face each other, thereby allowing a tool for machining to be inserted.

Referring to FIGS. 5, 6, and 29, the method of manufacturing the housing 300 may include an operation of applying a masking solution to the connector 330 (P200). The masking solution may be applied to the coupling surface (e.g., the coupling surface 334 of FIG. 7) of the connector 300.

Referring to FIGS. 5, 6, and 29, the method of manufacturing the housing 300 may include an operation of machining the coupling surface (e.g., the coupling surface 334 of FIG. 7) (P300). For example, machining of the coupling surface 334 may be performed by the machining tool T illustrated in FIG. 9. For example, machining of the coupling surface 334 may be performed by CNC machining. For example, machining of the coupling surface 334 may be performed by a laser-based cutting method. For example, machining of the coupling surface 334 may be performed by an etching method. The operation of machining the coupling surface 334 (P300) may be performed in a state in which the connector 330 of the housing 300 is seated on a jig. After the operation of machining the coupling surface 334 (P300), the recess 340 may be formed in the connector 330.

Referring to FIGS. 5, 6, and 29, the method of manufacturing the housing 300 may include an operation of removing the masking solution from the connector 330 in which the recess 340 is formed (P400). After the machining operation (P300), the masking solution may be removed from the connector 330. The method of manufacturing the housing 300 may include an operation of cleaning the connector 330 in which the recess 340 is formed (P500).

Referring to FIGS. 5, 6, and 29, the method of manufacturing the housing 300 may include an operation of machining the coupling hole 350 (P600). For example, the coupling hole 350 may be machined by CNC machining. For example, the coupling hole 350 may be machined by the machining tool T illustrated in FIG. 9. For example, the coupling hole 350 may be machined by an etching method. The operation of machining the coupling hole 350 (P600) may be performed in a state in which the connector 330 of the housing 300 is seated on a jig. After the operation of machining the coupling hole 350 (P600), the coupling hole 350 may be formed in the recess 340.

Referring to FIGS. 5, 6, and 29, after the recess 340 and the coupling hole 350 are machined in the first connector 330a by the above-described machining processes (e.g., P100, P200, P300, P400, P500, and P600), the recess 340 and the coupling hole 350 may be machined in the second connector 330b in the same manner.

A wearable electronic device may include a housing in which a display is disposed, and a connector coupled to a strap configured to fix the housing to a user's body. The connector may protrude outward from the housing and may be coupled to the strap. The strap may be detachably coupled to the connector, and a user may couple or decouple the strap to or from the connector depending on a usage state. When the strap is attached to or detached from the connector, it is necessary to align a coupling portion of the strap with a coupling portion of the connector.

A problem to be solved by the disclosure may be to facilitate coupling between the strap and the connector.

Another problem to be solved by the disclosure may be to guide a coupling pin of the strap to a coupling hole.

The problems to be solved by the disclosure are not limited to the above-described ones and may be variously defined without departing from the spirit and scope of the disclosure.

According to various embodiments of the disclosure, an electronic device may facilitate coupling between the strap and the connector by forming a recess in the connector and allowing the coupling pin to move along the recess.

According to various embodiments of the disclosure, the coupling pin may move toward the coupling hole along a guide wall of the recess.

The effects that are capable of being obtained by the disclosure are not limited to those described above, and other effects not described above may be clearly understood by a person ordinarily skilled in the art to which the disclosure belongs based on the following description.

According to an embodiment of the disclosure, a wearable electronic device (e.g., 200 of FIGS. 1 to 28) may include a housing (e.g., 300 of FIGS. 1 to 28) including a connector (e.g., 330 of FIGS. 1 to 28) configured to be coupled with an outer circumference wall (e.g., 320 of FIGS. 1 to 28) and a strap (e.g., 360 of FIGS. 1 to 28).

According to an embodiment of the disclosure, the wearable electronic device (e.g., 200 of FIGS. 1 to 28) may include a display (e.g., 220 of FIGS. 1 to 28) disposed in the housing (e.g., 300 of FIGS. 1 to 28).

According to an embodiment of the disclosure, the connector (e.g., 330 of FIGS. 1 to 28) may include a coupling surface (e.g., 334 of FIGS. 1 to 28) extending outward from the outer circumference wall (e.g., 320 of FIGS. 1 to 28).

According to an embodiment of the disclosure, the connector (e.g., 330 of FIGS. 1 to 28) may include a coupling hole (e.g., 350 of FIGS. 1 to 28) configured to allow insertion of at least a portion of the strap (e.g., 360 of FIGS. 1 to 28,).

According to an embodiment of the disclosure, the connector (e.g., 330 of FIGS. 1 to 28) may include a recess (e.g., 340 of FIGS. 1 to 28) recessed from the coupling surface (e.g., 334 of FIGS. 1 to 28). At least a portion of the coupling hole (e.g., 350 of FIGS. 1 to 28) is positioned in the recess.

According to an embodiment of the disclosure, the recess (e.g., 340 of FIGS. 1 to 28) may include a guide surface (e.g., 341 of FIGS. 1 to 28) in which the coupling hole (e.g., 350 of FIGS. 1 to 28) is formed.

According to an embodiment of the disclosure, the recess (e.g., 340 of FIGS. 1 to 28) may include a guide wall (e.g., 342, 343, 344, 345, 346, 347 of FIGS. 1 to 28) surrounding the guide surface (e.g., 341 of FIGS. 1 to 28).

According to an embodiment of the disclosure, the guide wall (e.g., 342, 343, 344, 345, 346, 347 of FIGS. 1 to 28) may include a first guide wall (e.g., 342 of FIGS. 1 to 28).

According to an embodiment of the disclosure, the guide wall (e.g., 342, 343, 344, 345, 346, 347 of FIGS. 1 to 28) may include a second guide wall (e.g., 343 of FIGS. 1 to 28) spaced apart from the first guide wall (e.g., 342 of FIGS. 1 to 28).

According to an embodiment of the disclosure, the guide wall (e.g., 342, 343, 344, 345, 346, 347 of FIGS. 1 to 28) may include a third guide wall (e.g., 344 of FIGS. 1 to 28) spaced apart from the first and second guide walls (e.g., 342, 343 of FIGS. 1 to 28).

According to an embodiment of the disclosure, the guide wall (e.g., 342, 343, 344, 345, 346, 347 of FIGS. 1 to 28) may include a first edge (e.g., 345 of FIGS. 1 to 28) connecting the first guide wall (e.g., 342 of FIGS. 1 to 28) and the second guide wall (e.g., 343 of FIGS. 1 to 28).

According to an embodiment of the disclosure, the guide wall (e.g., 342, 343, 344, 345, 346, 347 of FIGS. 1 to 28) may include a second edge (e.g., 346 of FIGS. 1 to 28) connecting the first guide wall (e.g., 342 of FIGS. 1 to 28) and the third guide wall (e.g., 344 of FIGS. 1 to 28).

According to an embodiment of the disclosure, the guide wall (e.g., 342, 343, 344, 345, 346, 347 of FIGS. 1 to 28) may include a third edge (e.g., 347 of FIGS. 1 to 28) connecting the second guide wall (e.g., 343 of FIGS. 1 to 28) and the third guide wall (e.g., 344 of FIGS. 1 to 28).

According to an embodiment of the disclosure, the first edge (e.g., 345 of FIGS. 1 to 28) may be positioned farther from the outer circumference wall (e.g., 320 of FIGS. 1 to 28) than the second and third edges (e.g., 346, 347 of FIGS. 1 to 28).

According to an embodiment of the disclosure, the coupling hole (e.g., 350 of FIGS. 1 to 28) may be positioned closer to the first edge (e.g., 345 of FIGS. 1 to 28) than to the second and third edges (e.g., 346, 347 of FIGS. 1 to 28).

According to an embodiment of the disclosure, the connector (e.g., 330 of FIGS. 1 to 28) may include a first wall (e.g., 331 of FIGS. 1 to 28) extending outward from the outer circumference wall (e.g., 320 of FIGS. 1 to 28).

According to an embodiment of the disclosure, the connector (e.g., 330 of FIGS. 1 to 28) may include a second wall (e.g., 332 of FIGS. 1 to 28) extending outward from the outer circumference wall (e.g., 320 of FIGS. 1 to 28) and spaced apart from the first wall (e.g., 331 of FIGS. 1 to 28).

According to an embodiment of the disclosure, the connector (e.g., 330 of FIGS. 1 to 28) may include a third wall (e.g., 333 of FIGS. 1 to 28) connecting the first wall (e.g., 331 of FIGS. 1 to 28) and the second wall (e.g., 332 of FIGS. 1 to 28).

According to an embodiment of the disclosure, the recess (e.g., 340 of FIGS. 1 to 28) may include a guide wall (e.g., 342, 343, 344, 345, 346, 347 of FIGS. 1 to 28) having a closed loop shape.

According to an embodiment of the disclosure, the strap (e.g., 360 of FIGS. 1 to 28) may include a coupling pin (e.g., 374, 375 of FIGS. 1 to 28) configured to be inserted into the coupling hole (e.g., 350 of FIGS. 1 to 28).

According to an embodiment of the disclosure, the recess (e.g., 340 of FIGS. 1 to 28) may include a guide wall (e.g., 342, 343, 344, 345, 346, 347 of FIGS. 1 to 28) configured to guide movement of the coupling pin (e.g., 374, 375 of FIGS. 1 to 28).

According to an embodiment of the disclosure, the recess (e.g., 340 of FIGS. 1 to 28) may include a guide surface (e.g., 341 of FIGS. 1 to 28) forming an inclined angle θ with the coupling surface (e.g., 334 of FIGS. 1 to 28) of the connector (e.g., 330 of FIGS. 1 to 28).

According to an embodiment of the disclosure, the recess (e.g., 540; 640 of FIGS. 1 to 28) may include a guide surface (e.g., 541; 641 of FIGS. 1 to 28) in which the coupling hole (e.g., 550; 650 of FIGS. 1 to 28) is formed.

According to an embodiment of the disclosure, the recess (e.g., 540; 640 of FIGS. 1 to 28) may include a tunnel (e.g., 546; 646 of FIGS. 1 to 28) extending from the guide surface (e.g., 541; 641 of FIGS. 1 to 28) to the outside of the connector (e.g., 530; 630 of FIGS. 1 to 28).

According to an embodiment of the disclosure, the connector (e.g., 530 of FIGS. 1 to 28) may include a first wall (e.g., 531 of FIGS. 1 to 28) connected to the tunnel (e.g., 546 of FIGS. 1 to 28).

According to an embodiment of the disclosure, the tunnel (e.g., 546 of FIGS. 1 to 28) may include an outlet (e.g., 549 of FIGS. 1 to 28) opened at the first wall (e.g., 531 of FIGS. 1 to 28).

According to an embodiment of the disclosure, the wearable electronic device (e.g., 200 of FIGS. 1 to 28) may include a cover (e.g., 860; 960 of FIGS. 1 to 28) configured to surround at least a portion of the housing (e.g., 800; 900 of FIGS. 1 to 28).

According to an embodiment of the disclosure, the cover (e.g., 860; 960 of FIGS. 1 to 28) may include a guide end portion (e.g., 8643a; 9643a of FIGS. 1 to 28) spaced apart from the coupling surface (e.g., 834; 934 of FIGS. 1 to 28) of the connector (e.g., 830; 930 of FIGS. 1 to 28).

According to an embodiment of the disclosure, the strap (e.g., 360 of FIGS. 1 to 28) may include a coupling pin (e.g., 374 of FIGS. 1 to 28) guided to move along the guide end portion (e.g., 8643a; 9643a of FIGS. 1 to 28).

According to an embodiment of the disclosure, the cover (e.g., 860; 960 of FIGS. 1 to 28) may include an edge (e.g., 8645; 9645 of FIGS. 1 to 28) spaced apart from the coupling hole (e.g., 850; 9646 of FIGS. 1 to 28).

According to an embodiment of the disclosure, the strap (e.g., 360 of FIGS. 1 to 28) may include a coupling pin (e.g., 374 of FIGS. 1 to 28) configured to move toward the edge (e.g., 8645; 9645 of FIGS. 1 to 28).

According to an embodiment of the disclosure, the connector (e.g., 930 of FIGS. 1 to 28) may include a connector end portion (e.g., 933 of FIGS. 1 to 28) facing at least a portion of the cover (e.g., 960 of FIGS. 1 to 28).

According to an embodiment of the disclosure, the cover (e.g., 960 of FIGS. 1 to 28) may include a guide end portion (e.g., 9645 of FIGS. 1 to 28) spaced apart from the connector end portion (e.g., 933 of FIGS. 1 to 28) and forming the coupling hole (e.g., 9646 of FIGS. 1 to 28) between the connector end portion (e.g., 933 of FIGS. 1 to 28) and the guide end portion (e.g., 9645 of FIGS. 1 to 28).

According to an embodiment of the disclosure, the connector (e.g., 330 of FIGS. 1 to 28) may include a coupling surface (e.g., 334 of FIGS. 1 to 28) extending outward from the outer circumference wall (e.g., 320 of FIGS. 1 to 28).

According to an embodiment of the disclosure, the connector (e.g., 330 of FIGS. 1 to 28) may include a recess (e.g., 340 of FIGS. 1 to 28) recessed from the coupling surface (e.g., 334 of FIGS. 1 to 28) and including a guide surface (e.g., 341 of FIGS. 1 to 28) spaced apart from the coupling surface (e.g., 334 of FIGS. 1 to 28).

According to an embodiment of the disclosure, the connector (e.g., 330 of FIGS. 1 to 28) may include a coupling hole (e.g., 350 of FIGS. 1 to 28) formed in the guide surface (e.g., 341 of FIGS. 1 to 28).

In the foregoing detailed description of this document, specific embodiments have been described. However, it will be evident to a person ordinarily skilled in the art that various modifications can be made without departing from the scope of the disclosure.

Although the disclosure has been described with reference to an embodiment as an example, it is to be understood that the embodiment is intended to be exemplary and is not limiting the disclosure. It will be apparent to those skilled in the art that various changes in form and detail may be made without departing from the overall scope of the disclosure, including the appended claims and their equivalents.

## Claims

1. A wearable electronic device (200) comprising:
a housing (300) including an outer circumference wall (320) and a connector (330) configured to be coupled with a strap (360); and
a display (220) disposed in the housing (300),
wherein the connector (330) comprises:
a coupling surface (334) extending outward from the outer circumference wall (320),
a coupling hole (350) configured to allow insertion of at least a portion of the strap (360), and
a recess (340) recessed from the coupling surface (334), wherein at least a portion of the coupling hole (350) is positioned in the recess (340).

2. The wearable electronic device of claim 1, wherein the recess (340) includes:
a guide surface (341) in which the coupling hole (350) is formed, and
a guide wall (342, 343, 344, 345, 346, 347) surrounding the guide surface (341).

3. The wearable electronic device of claim 2, wherein the guide wall (342, 343, 344, 345, 346, 347) includes:
a first guide wall (342);
a second guide wall (343) spaced apart from the first guide wall (342);
a third guide wall (344) spaced apart from the first and second guide walls (342, 343);
a first edge (345) connecting the first guide wall (342) and the second guide wall (343);
a second edge (346) connecting the first guide wall (343) and the third guide wall (344); and
a third edge (347) connecting the second guide wall (343) and the third guide wall (344).

4. The wearable electronic device of claim 3, wherein the first edge(345) is positioned farther from the outer circumference wall (320) than the second and third edges (346, 347), and wherein the coupling hole (350) is closer to the first edge (345) than to the second and third edges (346, 347).

5. The wearable electronic device of any one of claims 1 to 4, wherein the connector(330) includes:
a first wall (331) extending outward from the outer circumference wall (320);
a second wall (332) extending outward from the outer circumference wall (320) and spaced apart from the first wall (331); and
a third wall (333) connecting the first wall (331) and the second wall (332).

6. The wearable electronic device of any one of claims 1 to 5, wherein the recess (340) includes a guide wall (342, 343, 344, 345, 346, 347) having a closed loop shape.

7. The wearable electronic device of any one of claims 1 to 6, wherein the strap (360) includes a coupling pin (374, 375) configured to be inserted into the coupling hole (350).

8. The wearable electronic device of claim 7, wherein the recess (340) includes a guide wall (342, 343, 344, 345, 346, 347) configured to guide a movement of the coupling pin (374, 375).

9. The wearable electronic device of any one of claims 1 to 8, wherein the recess (340) includes a guide surface (341) forming an inclined angle (θ) with respect to the coupling surface (334) of the connector (330).

10. The wearable electronic device of any one of claims 1 to 9, wherein the recess (540; 640) includes:
a guide surface (541; 641) in which the coupling hole (550; 650) is formed; and
a tunnel (546; 646) extending from the guide surface (541; 641) toward an outside of the connector (530; 630).

11. The wearable electronic device of claim 10, wherein the connector (530) includes a first wall (531) connected to the tunnel (546), and
wherein the tunnel (546) includes an outlet (549) opened at the first wall (531).

12. The wearable electronic device of any one of claims 1 to 11, further comprising:
a cover (860; 960) configured to surround at least a portion of the housing (800; 900).

13. The wearable electronic device of claim 12, wherein the cover (860; 960) includes a guide end portion (8643a; 9643a) spaced apart from the coupling surface (834; 934) of the connector (830; 930), and wherein the strap(360) includes a coupling pin (374) guided to move along the guide end portion (8643a, 9643a).

14. The wearable electronic device of claim 12 or 13, wherein the cover (860; 960) includes an edge (8645; 9645) spaced apart from the coupling hole (850; 9646), and
wherein the strap (360) includes a coupling pin(374) configured to move toward the edge (8645; 9645).

15. The wearable electronic device of any one of claims 12 to 14, wherein the connector (930) includes a connector end portion (933) facing at least a portion of the cover (960), and
wherein the cover (960) includes a guide end portion (9645) that is spaced apart from the connector end portion (933) and forms the coupling hole (9646) between the connector end portion (933) and the guide end portion (9645).
